# DEMANDE DE BREVET EUROPEEN

(11) **EP 2 647 931 A1**
(43) Date de publication de la demande: **09.10.2013**
(21) Numéro de dépôt: 13162127.8
(22) Date de dépôt: 03.04.2013
(51) Int. Cl.: F25D 3/10, F25D 25/00

(54) **Dispositif de stockage de produits à des températures cryogéniques**

(30) Priorité: 04.04.2012 FR 1253075
(71) Demandeur: CRYOPAL, 77607 Bussy Saint-Georges (FR); L'AIR LIQUIDE, SOCIETE ANONYME POUR L'ETUDE ET L'EXPLOITATION DES PROCEDES GEORGES CLAUDE, 75007 Paris (FR)
(72) Inventeur: Reymond, Christian, 95160 MONTMORENCY (FR); Thonnelier, Jean-Yves, 78960 VOISINS LE BRETONNEUX (FR)
(74) Mandataire: De Cuenca, Emmanuel Jaime

(57) **Abrégé**

Dispositif de stockage de produits à des températures cryogéniques comprenant au moins une paroi (3) interne délimitant un volume (30) de stockage sec ayant une extrémité supérieure ouverte, un réservoir (2) de liquide cryogénique disposé autour de la paroi (3) interne et une première paroi (4) externe délimitant une enceinte externe abritant la paroi (3) interne et le réservoir (2) de liquide cryogénique le dispositif comportant en outre un couvercle (7) de fermeture sélective de l'enceinte externe délimitée par la première paroi externe (4), caractérisé en ce que le réservoir (2) de liquide cryogénique est monté pivotant relativement à la première paroi (4) externe

## Description

La présente invention concerne un dispositif de stockage de produits à des températures cryogéniques.

L'invention concerne plus particulièrement un dispositif de stockage de produits à des températures cryogéniques comprenant au moins une paroi interne délimitant un volume de stockage sec ayant une extrémité supérieure ouverte, un réservoir de liquide cryogénique disposé autour de la paroi interne et une première paroi externe délimitant une enceinte externe abritant la paroi interne et le réservoir de liquide cryogénique le dispositif comportant en outre un couvercle de fermeture sélective de l'enceinte externe délimitée par la première paroi externe.

L'invention concerne notamment les dispositifs de cryoconservation de produits, en particulier les échantillons de matière biologique.

Une forme de réalisation connue pour de tels dispositifs consiste à prévoir un réservoir de liquide cryogénique (généralement de l'azote) dans lequel sont immergés les produits à conserver.

Dans certaines configurations, les produits sont disposés sur un panier immergé dans l'azote. Le panier peut être monté rotatif dans le bain d'azote (cf. par exemple WO2008/070243 ou US5620110).

D'autres solutions connues utilisent des dispositifs de stockage cryobiologiques dits « secs », c'est à dire que les produits à conserver à basse température ne sont pas en immersion dans un bain d'azote liquide mais seulement contenus dans un panier dont les parois sont refroidies par cet azote et le cas échéant également en contact avec des vapeurs froides de cet azote. On pourra se référer à titre d'exemple aux documents suivants : EP1087193, WO01/09557, ou WO2008/009840.

Ces diverses solutions présentent des avantages respectifs mais également des inconvénients ou incompatibilités.

Un panier tournant dépourvu d'orifice pouvant communiquer avec le bain d'azote est soumis à la poussée d'Archimède du bain dans lequel il est plongé, ce qui nécessite un ancrage du panier sur le fond du dispositif. Dans le cas où le panier est au contraire pourvu de tels orifices, en cas de défaillance du système de régulation du niveau d'azote liquide, ce liquide peut déborder dans le compartiment sec de stockage.

Un panier sec est refroidi par ses parois, par convection naturelle, mais sa forme en cul-de sac, ne lui permet pas d'être balayé efficacement par les vapeurs froides issues de la vaporisation de l'azote.

Un but de la présente invention est de pallier tout ou partie des inconvénients de l'art antérieur relevés ci-dessus.

A cette fin, le dispositif de stockage de produits à des températures cryogéniques selon l'invention, par ailleurs conforme à la définition générique qu'en donne le préambule ci-dessus, est essentiellement caractérisé en ce le réservoir de liquide cryogénique est monté pivotant relativement à la première paroi externe.

Par ailleurs, des modes de réalisation de l'invention peuvent comporter l'une ou plusieurs des caractéristiques suivantes :
- la paroi interne et le réservoir de liquide cryogénique sont solidaires en rotation relativement à la première paroi externe,
- au moins une partie de la paroi interne délimite également en partie le réservoir de liquide cryogénique,
- le réservoir de liquide cryogénique comporte une extrémité supérieure ouverte pour permettre la circulation de vapeur de liquide cryogénique du réservoir de liquide cryogénique vers le volume de stockage délimité par la paroi interne,
- l'extrémité supérieure de la paroi interne délimitant l'extrémité ouverte du volume de stockage dépasse l'extrémité supérieure ouverte du réservoir,
- l'extrémité supérieure de la paroi interne délimitant l'extrémité ouverte du volume de stockage dépasse l'extrémité supérieure ouverte du réservoir,
- le dispositif comporte un circuit d'évacuation des vapeurs de liquide cryogénique vers l'extérieur du dispositif,
- le circuit d'évacuation des vapeurs comprend un conduit de collecte de gaz ayant une extrémité inférieure ouverte débouchant dans la partie inférieure du volume de stockage et une extrémité supérieure en communication avec l'extérieur du dispositif,
- l'extrémité supérieure du conduit de collecte de gaz communique avec l'extérieur du dispositif via un passage au travers l'enceinte et/ou via un passage formé au travers du couvercle,
- le dispositif comporte une seconde paroi externe disposée autour de la première paroi externe, les première et seconde parois externes formant une enceinte à double enveloppe dont l'interstice comprend un élément d'isolation thermique,
- la partie inférieure de l'enceinte comprend un orifice d'évacuation sélective de liquide stagnant entre d'une part la première paroi externe et, d'autre part, le volume de stockage et le réservoir,
- le fond du volume de stockage délimité par la paroi interne et le fond du réservoir de liquide cryogénique sont délimités par une même cloison commune,
- le réservoir de liquide cryogénique (et le cas échéant la paroi interne délimitant le volume de stockage) est monté pivotant sur la première paroi externe via au moins un système à palier et/ou pivot,
- le réservoir de liquide cryogénique (et le cas échéant la paroi interne délimitant le volume de stockage) est monté pivotant sur la première paroi externe via au moins un galet interposé entre le réservoir et la première paroi externe,
- le réservoir et le cas échéant la paroi interne est mobile en rotation selon un axe de révolution fictif qui s'étend entre un fond et l'extrémité supérieure du réservoir,
- le dispositif comporte un écran disposé sélectivement au-dessus de l'extrémité supérieure ouverte du réservoir, l'écran ayant une ouverture centrale correspondant à l'ouverture supérieure du volume de stockage délimité par la paroi interne de sorte que l'écran forme un obstacle pour empêcher ou freiner l'évacuation d'au moins une partie des vapeurs de liquide cryogénique susceptible de s'échapper vers l'extérieur lorsque le couvercle est ouvert,
- le fond du volume de stockage délimité par la paroi interne comporte une ou des ouvertures pour permettre une circulation gazeuse entre le volume de stockage et l'espace situé entre d'une part la première paroi externe et, d'autre part, le volume de stockage et le réservoir,
- les première et seconde parois externes sont espacées l'une de l'autre et forment une enceinte à double enveloppe dont l'interstice est sous vide d'air à une pression inférieure à la pression atmosphérique et un isolant thermique, par exemple multicouche,
- l'enceinte comprend un conduit d'amenée sélective de liquide cryogénique dans le réservoir, le conduit d'amenée ayant une première extrémité en liaison avec l'extérieur du dispositif et une seconde extrémité débouchant dans le réservoir,
- le réservoir de liquide est situé autour de la surface latérale du volume de stockage délimité par la paroi interne, à l'exclusion du fond du volume de stockage,
- le réservoir de liquide est situé autour de la surface latérale et du fond du volume de stockage délimité par la paroi interne,
- le réservoir de liquide de forme générale cylindrique et est mobile en rotation selon l'axe dudit cylindre,
- le volume de stockage délimité par la paroi est cylindrique et mobile en rotation selon l'axe dudit cylindre,
- le réservoir et le volume de stockage délimité par la paroi sont concentriques et leurs axes de révolution respectifs sont confondus,
- l'extrémité inférieure du conduit présente une entrée de gaz ayant une section de passage comprise entre 30 et 300cm² et de préférence comprise entre 90 et 210cm².

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un premier exemple de réalisation d'une partie d'un dispositif de stockage selon l'invention,
- la figure 2 représente une vue en coupe, schématique et partielle, illustrant un deuxième exemple de réalisation d'une partie d'un dispositif de stockage selon l'invention,
- la figure 3 représente une vue en coupe, schématique et partielle, illustrant un troisième exemple de réalisation d'une partie d'un dispositif de stockage selon l'invention,
- la figure 4 représente une vue en coupe, schématique et partielle, illustrant un quatrième exemple de réalisation d'une partie d'un dispositif de stockage selon l'invention,
- la figure 5 représente une vue en coupe, schématique et partielle, illustrant un cinquième exemple de réalisation d'une partie d'un dispositif de stockage selon l'invention,
- la figure 6 représente une vue en coupe d'un détail d'une variante de réalisation du dispositif de stockage selon l'invention.

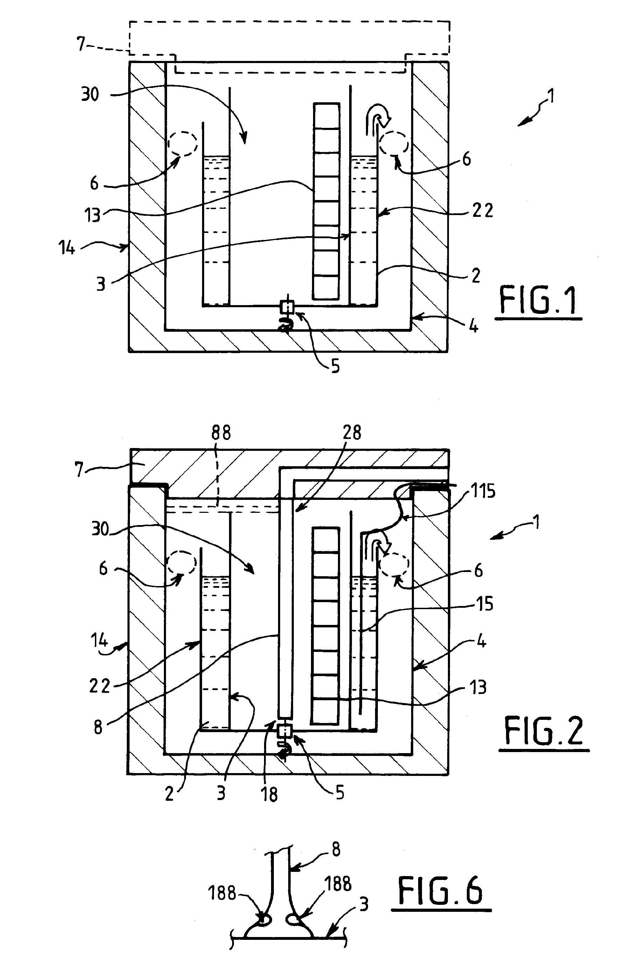

Le dispositif 1 de stockage de produits à des températures cryogéniques représenté à la figure 1 comprend une paroi 3 interne délimitant un volume 30 de stockage pour des produits. Par exemple, la paroi 3 interne délimite un volume 30 cylindrique ouvert à son extrémité supérieure. La paroi interne 3 est entourée d'une paroi 22 délimitant un réservoir 2 pour du liquide cryogénique. C'est-à-dire que le réservoir 2 cryogénique est délimité intérieurement par une face de la paroi 3 interne et extérieurement par une paroi 22 de réservoir. La paroi 22 de réservoir 2 est de préférence cylindrique également et concentrique à la paroi 3 interne de façon à former une enveloppe de liquide autour de la paroi 3 interne.

Cette configuration permet de maintenir un volume d'azote raisonnable qui malgré tout vient entourer le volume 30 de stockage jusqu'au niveau de la partie supérieure de dernier.

De préférence, et sans que ce soit limitatif pour autant, le réservoir 2 de liquide se s'étend pas autour du fond inférieur du volume de stockage. Par exemple une même cloison peut former aussi bien le fond du réservoir 2 que le fond du volume de stockage. De cette façon, le volume 30 de stockage n'est pas soumis à une poussée d'Archimède

Selon une particularité avantageuse, le réservoir 2 de liquide cryogénique est monté pivotant relativement à la première paroi 4 externe. Par exemple, le réservoir 2 de liquide cryogénique est monté pivotant relativement à la première paroi 4 externe via un système 5 à palier et/ou pivot interposé entre la cloison formant le fond du réservoir 2 de liquide cryogénique et le fond de la première paroi 4 externe. De plus, au moins un galet 6 et de préférence trois galets 6 peuvent être interposés entre le réservoir 2 et la première paroi 4 externe (par exemple dans la partie supérieure du réservoir 2.

Dans l'exemple de réalisation représenté, le réservoir 2 de liquide et le volume 30 de stockage sont solidaires d'une cloison de fond commune. De ce fait, le volume 30 de stockage délimité par la paroi 3 interne et le réservoir 2 de liquide cryogénique sont solidaires en rotation relativement à la première paroi 4 externe.

Bien entendu il est possible de prévoir une autre configuration dans laquelle la paroi 3 interne est fixe tandis que le réservoir 2 est mobile en rotation par rapport à la paroi 3 interne et à la paroi 4 externe.

Dans l'exemple représenté, le réservoir 2 de liquide cryogénique comporte une extrémité supérieure ouverte pour permettre la circulation de vapeur de liquide cryogénique du réservoir 2 de liquide cryogénique vers le volume 30 de stockage. Bien entendu, cette forme de réalisation n'est nullement limitative. Ainsi, par exemple il est possible d'envisager une extrémité supérieure fermée pour le réservoir 2, c'est-à-dire que le volume 30 de stockage n'est dans ce cas refroidi que par refroidissement de la paroi 3 interne.

De même, à la place de l'extrémité supérieure complètement ouverte, il est possible de prévoir une ou des ouvertures réduites (des orifices) pour assurer un transit contrôlé de gaz vaporisé depuis le réservoir 2 vers le volume 30 de stockage.

Le dispositif comprend également une première paroi 4 externe délimitant une enceinte externe abritant la paroi 3 interne et le réservoir 2 de liquide cryogénique. C'est-à-dire que la paroi 4 externe forme le carter du dispositif. De préférence, sans que ceci soit nécessaire, le dispositif possède une seconde paroi externe 14 disposée autour de la première paroi 4 externe. Les première 4 et seconde 14 parois externes forment ainsi une enceinte à double enveloppe dont l'interstice peut comprendre un élément d'isolation thermique, par exemple au moins une couche de matériau isolant thermique et/ou une atmosphère sous vide d'air.

Cette configuration ménage un espace entre l'azote du réservoir 2 et la ou les parois externes 4, 14 qui limitent les pertes thermiques vers l'extérieur par conduction. Le dispositif peut ainsi maintenir efficacement des températures très basses en son sein.

Pour un souci d'illustration et de lisibilité, il faut noter que dans les figures les proportions ne sont pas respectées. Ainsi, l'épaisseur du réservoir 2 peut être comprise entre 2 et 9 cm (de préférence 3 à 5 cm) tandis que l'espace entre le réservoir 2 et la première paroi 4 interne est de préférence plus réduit, de la dimension du ou des galets 6 par exemple.

Le dispositif comporte également un couvercle 7 de fermeture sélective de l'enceinte externe délimitée par la ou les parois externes 4, 14. Le couvercle 7 comprend également de préférence une structure isolante thermiquement, par exemple de même nature que la structure des parois 4, 14 externes (isolant et/ou double paroi avec vide d'air).

Cette structure permet de proposer à l'utilisateur un stockage cryogénique sec tout en permettant d'offrir un volume 30 de stockage tournant qui facilite l'ergonomie des manipulations pour l'utilisateur lors des dépôts et retraits. Le cas échéant, les produits peuvent être disposés dans un ou des paniers 13 de rangement posés de façon amovible dans le volume 30 de stockage.

La structure du dispositif ménage ainsi un espace gazeux entre le réservoir 2 de liquide et la paroi 4 externe. Cet espace gazeux a par exemple une épaisseur comprise entre 0,5cm et 10cm et de préférence comprise entre 1 et 5cm. Cet espace gazeux forme une couche isolante supplémentaire pour le dispositif par rapport aux architectures connues dans lesquelles le liquide est directement au contact de la paroi 4 extérieure. L'efficacité du dispositif est ainsi améliorée.

Comme illustré à la figure 1, l'extrémité supérieure de la paroi 3 interne définissant l'extrémité ouverte du volume 30 de stockage dépasse de préférence l'extrémité supérieure ouverte du réservoir 2.

Par exemple, l'extrémité supérieure de la paroi 3 interne définissant l'extrémité ouverte du volume 30 de stockage dépasse de 1 à 10cm et de préférence de 2 à 3cm l'extrémité supérieure ouverte du réservoir 2. De même, alternativement ou cumulativement l'extrémité supérieure de la paroi 3 interne définissant l'extrémité ouverte du volume 30 de stockage peut éventuellement être cintrée vers le réservoir 2 pour empêcher les retours de liquide dans le volume 30 de stockage.

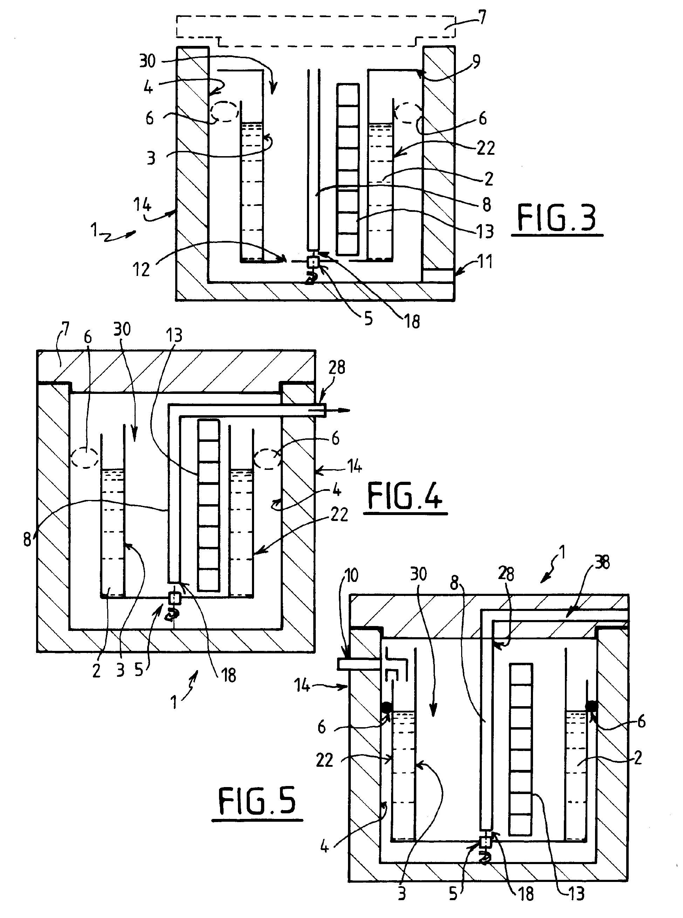

De cette façon, un éventuel débordement de liquide du réservoir 2 se produira uniquement dans l'espace entre le réservoir 2 et la première paroi 4 externe. Il s'agit d'une sécurité supplémentaire pour protéger le volume 30 de stockage. Comme illustré à la figure 3, la partie inférieure de l'enceinte peut comporter éventuellement à cet effet un orifice 11 d'évacuation sélectivement obturable pour évacuer du liquide en cas de débordement.

De préférence, le dispositif comporte un circuit d'évacuation des vapeurs de liquide cryogénique vers l'extérieur du dispositif pour éviter une surpression notamment lorsque le dispositif est clos par le couvercle.

La figure 2 illustre un exemple d'un tel circuit d'évacuation des vapeurs. Par soucis de concision les éléments identiques à ceux décrit ci-dessus en référence à la figure 1 seront désignés par les mêmes références numériques et ne seront pas décrits une seconde fois dans les figures 2 à 5.

Le circuit d'évacuation des vapeurs comprend un conduit 8 de collecte de gaz ayant une extrémité inférieure ouverte débouchant dans la partie inférieure du volume 30 de stockage. Par exemple, l'extrémité inférieure du conduit 8 de collecte affleure à quelques millimètres (cinq à quinze par exemple) ou quelques centimètres (un à dix par exemple) au-dessus du fond du volume 30 de stockage. Par exemple, le conduit 8 de collecte s'étend sur l'axe central du volume de stockage, entre la bas du volume 30 de stockage jusqu'à son extrémité supérieure. Ce conduit 8 de collecte est maintenu dans le volume de stockage par exemple via un bras 88, de préférence disposé radialement, prenant appui contre la paroi 3 interne ou tout autre arrangement approprié.

Le conduit 8 est par exemple un tube cylindrique ou non (par exemple ayant une section polygonale ou autre). De même, le conduit 8 peut avoir un diamètre constant ou non sur sa longueur.

Dans un autre arrangement possible représenté à la figure 6, l'extrémité inférieure du conduit 8 peut être solidaire du fond de la paroi 3 interne et est ajourée (trou(s) 188) pour autoriser l'entrée de vapeur dans le conduit 8. Le conduit 8 a par exemple un diamètre compris entre 5 et 10cm.

Le circuit d'évacuation comprend également un passage 38 de gaz formé au travers du couvercle 7 et qui débouche à l'extérieur du dispositif (éventuellement via un ou des clapets ou soupapes de surpression). Lorsque le couvercle 7 referme l'enceinte, l'extrémité supérieure ouverte du conduit 8 de collecte affleure au niveau d'une entrée du passage 38 formé dans le couvercle 7.

Cette configuration favorise un balayage permanent du volume 30 de stockage sec avec des vapeurs froides issues du réservoir 2 et avant leur extraction vers l'extérieur. En effet, pour sortir de l'enceinte, le liquide qui se vaporise dans le réservoir 2 ne peut circuler qu'au travers du conduit 8 de collecte. Le gaz froid est ainsi forcé à une circulation vers le bas du volume 30 de stockage pour entrer dans ce conduit 8. Les vapeurs froides descendent ainsi dans le volume de stockage sec pour remonter ensuite par ce conduit 8 central. Ceci créé un échange par confection forcée qui optimise le refroidissement des contenants de produits biologiques et assure une meilleure homogénéité de température.

Des organes supplémentaires (non représentés) peuvent également être prévus pour favoriser la coopération entre le conduit 8 et l'ouverture du passage 38 du couvercle. Par exemple, des éléments de centrage conjugués (par exemple par emboîtement), ou des éléments élastiques peuvent être prévus pour faciliter le positionnement entre les deux ouvertures en vis-à-vis (du conduit 8 et du passage 38).

La figure 2 se distingue de la figure 1 également en ce qu'une jauge 15 de niveau de liquide est disposée dans le réservoir 2. L'extrémité de cette jauge de niveau (par exemple du type capacitif ou électrique) comprend un fil 115 de transfert de données qui peut être mis en relation avec l'extérieur de l'enceinte en passant par exemple par le couvercle 7 (ou le cas échéant via les deux parois 4, 14 externes. De cette façon, le fil 115 peut être maintenu constamment dans une atmosphère gazeuse (c'est-à-dire hors du liquide).

Dans la variante de la figure 3, le couvercle 7 est en position ouverte et le passage 38 du couvercle 7 n'est pas représenté par soucis de simplification. De même, la jauge de niveau n'est pas présente à la figure 3.

Dans la variante de la figure 3, en position ouverte du couvercle 7, le dispositif comporte un écran 9 disposé sélectivement au-dessus de l'extrémité supérieure ouverte du réservoir 2 pour canaliser le gaz froid vers le bas du dispositif. L'écran 9, qui a par exemple la forme d'une couronne plane, possède une ouverture centrale correspondant à l'ouverture supérieure du volume 30 de stockage délimité par la paroi 3 interne. Ainsi, l'écran 9 forme un obstacle pour empêcher ou freiner l'évacuation d'au moins une partie des vapeurs de liquide cryogénique susceptible de s'échapper de l'enceinte vers l'extérieur lorsque le couvercle 7 est ouvert. L'écran 9 est de préférence une pièce distincte qui est mise en place uniquement lors de l'ouverture de l'enceinte.

Le fond de volume 30 de stockage peut par ailleurs comprendre un ou plusieurs orifices 12. Ainsi, lors d'un dégazage, le volume de gaz vaporisé peut être tel que ce dernier ne s'échappe que partiellement par un déversoir inférieur 11. Une proportion importante du gaz permet de donner une visibilité sur les échantillons si le fond du plateau présente des orifices 12. Cette configuration permet de limiter la formation de glace au niveau du couvercle 7.

La variante de la figure 4 se distingue de celle de la figure 2 en ce que la jauge de niveau n'est pas présente et en ce que le couvercle 7 ne comporte pas de passage 38 de gaz. Dans cette variante de réalisation l'extrémité supérieure du conduit 8 de collecte est coudée et se prolonge transversalement dans la partie supérieure de l'enceinte et au travers des parois 4, 14 externes. C'est-à-dire que le conduit 8 forme l'intégralité du circuit d'évacuation des vapeurs.

La variante de la figure 5 se distingue de celle de la figure 2 en ce que la jauge de niveau n'est pas présente et en ce que l'enceinte comprend un conduit 10 d'amenée sélective de liquide cryogénique dans le réservoir 2. Le conduit 10 d'amenée possède une première extrémité en liaison avec l'extérieur du dispositif (une source de liquide par exemple) et une seconde extrémité débouchant dans le réservoir (de préférence en partie haute de ce dernier).

Pour permettre le montage du réservoir 2 et du volume de stockage dans l'enceinte, le conduit 10 d'amenée est de préférence amovible relativement aux parois 4, 14 externes.

On conçoit donc aisément que tout en étant de structure simple et ergonomique, l'invention assure un refroidissement optimal de produits conservés dans une atmosphère cryogénique, sans les risques de contamination ou les désagréments des solutions connues.

## Revendications

1. Dispositif de stockage de produits à des températures cryogéniques comprenant au moins une paroi (3) interne délimitant un volume (30) de stockage sec ayant une extrémité supérieure ouverte, un réservoir (2) de liquide cryogénique disposé autour de la paroi (3) interne et une première paroi (4) externe délimitant une enceinte externe abritant la paroi (3) interne et le réservoir (2) de liquide cryogénique le dispositif comportant en outre un couvercle (7) de fermeture sélective de l'enceinte externe délimitée par la première paroi externe (4), **caractérisé en ce que** le réservoir (2) de liquide cryogénique est monté pivotant relativement à la première paroi (4) externe.

2. Dispositif selon la revendication 1, **caractérisé en ce que** la paroi (3) interne et le réservoir (2) de liquide cryogénique sont solidaires en rotation relativement à la première paroi (4) externe.

3. Dispositif selon la revendication 1 ou 2, **caractérisé en ce qu'**au moins une partie de la paroi (3) interne délimite également en partie le réservoir (2) de liquide cryogénique.

4. Dispositif selon l'une quelconque des revendications 1 à 3, **caractérisé en ce que** le réservoir (2) de liquide cryogénique comporte une extrémité supérieure ouverte pour permettre la circulation de vapeur de liquide cryogénique du réservoir (2) de liquide cryogénique vers le volume (30) de stockage délimité par la paroi (3) interne.

5. Dispositif selon la revendication 4, **caractérisé en ce que** l'extrémité supérieure de la paroi (3) interne délimitant l'extrémité ouverte du volume (30) de stockage dépasse l'extrémité supérieure ouverte du réservoir (2).

6. Dispositif selon l'une quelconque des revendications 1 à 6, **caractérisé en ce qu'il** comporte un circuit (8, 18, 38) d'évacuation des vapeurs de liquide cryogénique vers l'extérieur du dispositif.

7. Dispositif selon la revendication 6, **caractérisé en ce que** le circuit (8, 18, 38) d'évacuation des vapeurs comprend un conduit (8) de collecte de gaz ayant une extrémité inférieure ouverte débouchant dans la partie inférieure du volume (30) de stockage et une extrémité supérieure (28) en communication avec l'extérieur du dispositif.

8. Dispositif selon la revendication 7, **caractérisé en ce que** l'extrémité supérieure du conduit (8) de collecte de gaz communique avec l'extérieur du dispositif via un passage (38) au travers l'enceinte et/ou via un passage (38) formé au travers du couvercle (7).

9. Dispositif selon l'une quelconque des revendications 1 à 8, **caractérisé en ce qu'il** comporte une seconde paroi externe (14) disposée autour de la première paroi (4) externe, les première (4) et seconde (14) parois externes formant une enceinte à double enveloppe dont l'interstice comprend un élément d'isolation thermique.

10. Dispositif selon l'une quelconque des revendications 1 à 9, **caractérisé en ce que** la partie inférieure de l'enceinte comprend un orifice (11) d'évacuation sélective de liquide stagnant entre d'une part la première paroi (4) externe et, d'autre part, le volume (30) de stockage et le réservoir (2).
